Europäisches Patentamt

European Patent Office

Office européen des brevets

(11) Publication number: **0 114 230**
**B1**

# EUROPEAN PATENT SPECIFICATION

(45) Date of publication of patent specification: **12.11.86**

(51) Int. Cl.⁴: **G 02 B 6/38, H 01 R 13/28**

(21) Application number: **83111422.8**

(22) Date of filing: **15.11.83**

(54) Hermaphroditic optical fibre or electrical connector.

(30) Priority: **09.12.82 GB 8235195**

(43) Date of publication of application:
**01.08.84 Bulletin 84/31**

(45) Publication of the grant of the patent:
**12.11.86 Bulletin 86/46**

(84) Designated Contracting States:
**AT CH DE FR GB LI NL SE**

(56) References cited:
**US-A-2 046 221**

**IBM TECHNICAL DISCLOSURE BULLETIN, vol. 24, no. 3, August 1981, pages 1624-1626, New York (USA);**
**L. BAILLIET et al.: "Low cost fiber-optic connector with integral staking"**

(73) Proprietor: **ALLIED CORPORATION**
**Columbia Road and Park Avenue P.O. Box 2245R (Law Dept.)**
**Morristown New Jersey 07960 (US)**

(72) Inventor: **McDonald, Margaret Joan**
**29 Harold Road**
**Birchington Kent (GB)**

(74) Representative: **Abnett, Richard Charles et al**
**REDDIE & GROSE 16 Theobalds Road**
**London WC1X 8PL (GB)**

# Description

This invention relates to a hermaphroditic optical fibre or electrical connector.

Hermaphroditic connector members are known to avoid the requirement for having separate male and female connector types. In particular, it is known to provide a hermaphroditic optical fibre or electrical connector member comprising a body having, at its forward end, a mating surface for mating with an opposed identical connector member and a coupling member mounted around the body for rotation about a longitudinal axis of the connector member orthogonal to the said transverse axis. One such connector is described, for example, in IBM Technical Disclosure Bulletin Vol. 124, No. 3 pp 1624—1626.

It would be desirable to provide a simple, effective and rugged hermaphroditic connector member which can provide good alignment of the optical fibres or electrical contacts but which can be manufactured without undue expense and complexity.

In accordance with the invention, there is provided a hermaphroditic optical fibre or electrical connector member comprising a body having, at its forward end, a mating surface for mating with an opposed identical connector member the mating surface having 180° rotational symmetry about a transverse axis of the body and a coupling member mounted around the body for rotation about a longitudinal axis of the connector member orthogonal to the said transverse axis, wherein

two diametrically-opposed first locking conformations are provided on the coupling member;

a first portion of the body terminates rearwardly of the transverse axis and a second portion of the body extends forwardly of the first portion, two longitudinally-spaced second locking conformations being provided on the second portion of the body;

the coupling member is rotatable from a first orientation in which the connector member can be coupled to and uncoupled from an opposed identical connector member to a second orientation in which the connector members are locked in the coupled condition; and

the locking conformations are shaped and located such that upon mating with an opposed identical connector member and with the coupling member in its second orientation each of the two first locking conformations of the coupling member engages in a second locking conformation of a respective one of the coupled connector members to retain the connector members in the coupled condition.

This invention thus provides a hermaphroditic connector which is simple yet rugged in construction, provides good alignment of the optical fibres or electrical contacts and which can be manufactured without complexity and undue expense. The connector is easy to couple and uncouple, without a great deal of manual dexterity.

Figure 1 is a perspective view of two connector members embodying the invention about to be coupled;

Figure 2 is a side sectional view through one of the connector members of Figure 1 taken on the line II—II in Figure 3;

Figure 3 is an end view taken on the arrow III of the connector member of Figure 2;

Figure 4 to 6 are perspective views illustrating the coupling operation; and

Figure 7 is a transverse sectional view through two coupled connector members taken on the line VII—VII in Figure 6.

Description of the Preferred Embodiments

The hermaphroditic connector members 10, 10' illustrated in the drawings each comprise a connector body member 12 having a stepped end profile, a coupling ring 14 slidable over the body 12, and a rear cover member 16. The connector members are of generally cylindrically shape about a longitudinal axis 18.

The mating end profile of the body member 12 comprises two spaced parallel transverse substantially semi-circular wall surfaces 20, 22 at the forward and rearward ends of a central longitudinal planar section 24 lying on the axis 18. The body thus comprises a cylindrical body portion 26 and a semi-cylindrical extension 28. Each of the wall surfaces 20, 22 accommodates the forward end of the termination 30 of an optical fibre. The rear part of each termination 30 is housed in a bore 31, formed in the connector body 12, shown in Figure 2.

The planar section 24 includes a semi-cylindrical pin 32 extending forwardly from the rearward surface 22 and a semi-cylindrical groove 34 extending rearwardly from the forward surface 20. The end profile of the body thus has a 180° rotational symmetry about an axis 36 which is orthogonal to the longitudinal axis 18 which bisects the planar section 24.

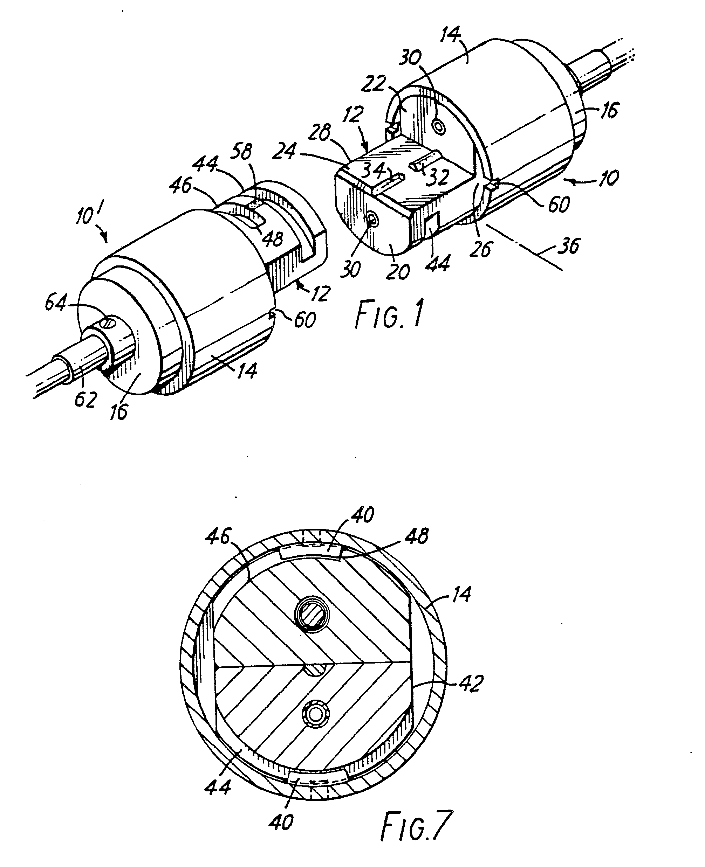

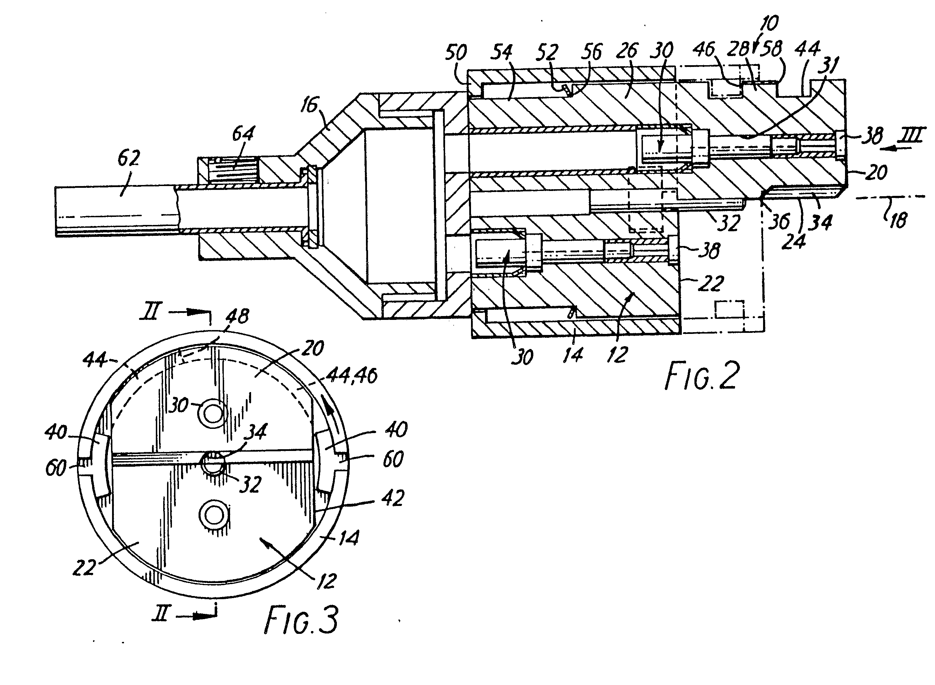

The coupling ring 14 is movable from a rearward position shown in Figure 1 and in full lines in Figure 2 to a forward position indicated in chain dotted lines in Figure 2. When in its rearward position the end surface of the fibre terminations 30, which may conveniently be provided by, for example, sapphire lenses 38, can be wiped clean. The interior of the coupling ring is provided at its forward end with two diametrically-opposed lugs 40, best seen in Figure 3. To accommodate these lugs in the rearward position of the coupling ring the sides of the body 12 are machined away so that the body 12 has flat side portions 42.

When slid forward the lugs 40 on the coupling ring 14 engage grooves on the body extension 28 so as to hold two connector members in the mated condition, as will now be described. To this end the extension 28 has two parallel circumferential grooves in its half-circular surface. These are seen in Figure 1 in particular to comprise a forward groove 44 and a rearward groove 46. The forward groove 44, as shown, is unobstructed but the rearward groove 46 does not extend completely around the semi-cylindrical periphery but rather is milled around a little more than 90 degrees. The end wall 48 of the groove 46 provides a stop against further rotation.

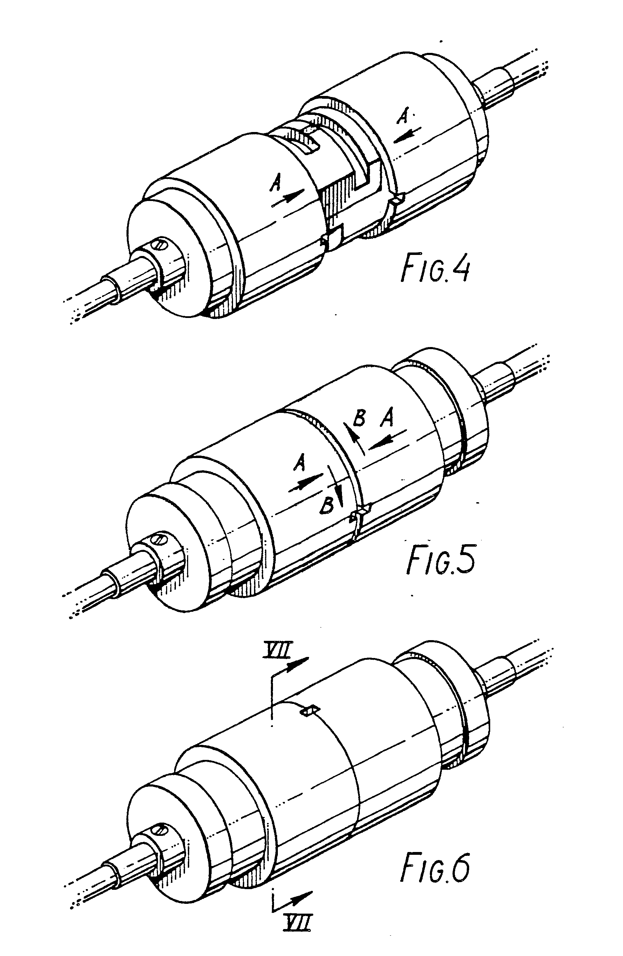

To couple two identical connector members the coupling rings 14 are first slid rearwardly and the mating surfaces 20, 22 wiped clean. The two connector parts 10, 10' are then orientated relative to each other as shown in Figure 1 and brought together to the position shown in Figure 4. In this position the pins 32 engage with the opposed grooves 34 to provide guiding location of the two connector members. The coupling rings 14 are then slid towards each other in the direction of the arrows A in Figure 4. As they approach their forwardmost position, inward flanges 50 on the rearward ends of the coupling rings will start to compress belleville type springs 52 mounted on a reduced-diameter portion 54 of the body 12 and bearing against a radial face 56 of the body 12. In this position the forward end of each coupling ring 14 covers the rearward half of the extension 28 of its own connector member and the forward half of the extension 28 of the opposed connector member. In this position the forward groove 44 of each connector member is aligned with the rearward groove 46 of the other.

As indicated in Figure 5, axial movement of the coupling rings 14 towards each other in the direction of the arrow A is now completed and rotational movement about the axis 18 commenced in the relative directions of the arrows B. When this happens the lugs 40 are rotated into the grooves 44, 46. In particular, one lug of each coupling ring will engage in the rearward groove 46 on that connector member while the other lug will engage in the forward groove 44 on the other connector member. The coupling rings are each rotated by 90° whereupon the lug in the groove 46 will hit the stop 48.

When the coupling rings are fully rotated, as shown in Figure 6, a colored area 58 which is located on the land between the two grooves will show through a cutaway 60 formed in the forward end of the coupling ring which is in line with the lug 40. In this way a visual indication of proper mating is given.

The connector members illustrated are designed for use with optical fibres and suitable terminations 30 for the fibres are shown in Figure 2. At least one termination system is provided with a degree of axial resilience. However, the connector members can be adapted for use with electrical connectors if the body member 12 is made of an insulating material and the optical fibre terminations are replaced by electrical contacts. While two fibres are shown, the connector can be used to connect two sections of a single fibre or, alternatively, each half of the connector can accommodate a large number of fibres.

The cable is secured in the rear cover by means of a ferrule 62 retained by a grub screw 64. A waterproof heat shrink tube can be added if desired over the cable, the end of the ferrule and the rear portion of the cover 16.

In the coupling operation, the pins 32 and grooves 34 provide initial positioning of the two connector members. However, the final positioning is given by the coupling ring and its lugs, and by the planar section 24, all of which can be accurately machined. The coupling ring 14 is spring loaded to assist in the return to the uncoupled position and must be pushed against the spring 52 to its locked position to retain the mated connection. The coupling ring on both halves should be engaged to achieve satisfactory mating. The fibre terminations 30 may be such that, when the connector is mated, the lenses 38 abut one another or, alternatively, they may be positioned so that the lenses 38 are spaced from one another on mating.

Using a connector in accordance with the invention, accurate alignment of optical fibres can be achieved by means of a simple mechanical construction. The connector members can be manufactured without difficulty and without the need for very small manufacturing tolerances. Where the connector members are of metal, such as stainless steel, they can be produced by conventional machining methods. Alternatively, the connector members may be formed of plastic material by moulding, or the like.

As it is of a simple and robust construction the connector is particularly well-suited to applications involving adverse conditions for example, outdoor applications such as the coupling of data transmission lines associated with field equipment. Furthermore, due to its simplicity the connector is easy and quick to couple and uncouple and does not require a great deal of manual dexterity on the part of its user. It can, therefore, be operated satisfactorily by, for example, a person wearing gloves.

The connector can easily be cleaned and will, in any case, operate when contaminated with a certain amount of dirt. Since the coupling ring can be withdrawn until it is clear of the forward extension of the connector body, the optical surfaces are also easily accessible for cleaning.

**Claims**

1. A hermaphroditic optical fibre or electrical connector member comprising a body having, at its forward end, a mating surface for mating with an opposed identical connector member the mating surface (24) having 180° rotational symmetry about a transverse axis (36) of the body and a coupling member mounted around the body for rotation about a longitudinal axis (18) of the connector member orthogonal to the said transverse axis, wherein:

two diametrically-opposed first locking conformations (40) are provided on the coupling member (14);

a first portion (26) of the body (12) terminates rearwardly of the transverse axis and a second portion (28) of the body extends forwardly of the first portion, two longitudinally-spaced second locking conformations (46, 48) being provided on the second portion of the body;

the coupling member is rotatable from a first orientation in which the connector member can be coupled to and uncoupled from an opposed identical connector member to a second orientation in which the connector members are locked in the coupled condition; and

the locking conformations (40, 46, 48) are shaped and located such that upon mating with an opposed identical connector member and with the coupling member in its second orientation each of the two first locking conformations of the coupling member engages in a second locking conformation of a respective one of the coupled connector members to retain the connector members in the coupled condition.

2. A connector member according to claim 1, in which the first locking conformations (40) are inward projections on the coupling member and the second locking conformations are circumferential groove portions (46, 48) on the second portion of the body.

3. A connector member according to claim 1, in which the first portion of the body is generally cylindrical and the second portion of the body is generally semi-cylindrical.

4. A connector member according to claim 3, in which the second portion of the body has a substantially planar portion (24) forming a part of the mating surface and containing the longitudinal axis.

5. A connector member according to claim 4, in which the planar portion is provided with guiding and locating means (32, 34) 180° rotationally symmetrical about the transverse axis.

6. A connector member according to claim 1, in which the coupling member is slidable to a position rearward of the forward end of the first portion of the body.

7. A connector member according to claim 1, in which the coupling member at least when in its forward position is resiliently biased in the rearward direction.

8. A connector member according to claim 1, including an aperture (60) formed in the coupling member, and the connector body being marked such that, when the coupling member is fully rotated into its second orientation, the portion of the connector member visible through the aperture in the coupling member provides a visual indication that locking is complete.

**Patentansprüche**

1. Hermaphroditisches optisches Faser- oder elektrisches Verbinder-Glied, welches folgendes aufweist:

einen Körper, der an seinem vorderen Ende eine Passungsoberfläche aufweist zum Zusammenpassen mit einem entgegengesetzt angeordneten identischen Verbinderglied, wobei die Passungsoberfläche (24) eine 180° Rotationssymmetrie um eine Querachse (36) des Körpers aufweist und mit einem Kupplungsglied angeordnet um den Körper herum zur Drehung um eine Längsachse (18) des Verbindergliedes senk-

recht zu der Querachse, wobei folgendes vorgesehen ist:

zwei diametral entgegengesetzt angeordnete erste Verriegelungsausbildungen (40) angeordnet auf dem Kupplungsglied (14),

ein erster Teil (26) auf dem Körper (12), der nach hinten gegenüber der Querachse endet und einen zweiten Teil (28) des Körpers, der sich nach vorne gegenüber dem ersten Teil erstreckt, wobei zwei mit Längsabstand angeordnete zweite Verriegelungsausbildungen (46, 48) an dem zweiten Teil des Körpers vorgesehen sind,

wobei das Kupplungsglied aus einer ersten Orientierung in eine zweite Orientierung verdrehbar ist, wobei in der ersten Orientierung das Verbinderglied mit einem entgegengesetzt angeordneten identischen Verbinderglied gekuppelt und von diesem entkuppelt werden kann, und wobei in der zweiten Orientierung die Verbinderglieder in dem gekuppelten Zustand verriegelt sind, und

wobei die Verriegelungsausbildungen (40, 48) derart geformt und angeordnet sind, daß bei Ineingriffbringen mit einem entgegengesetzten identischen Verbinderglied und mit dem Kupplungsglied in seiner zweiten Orientierung die zwei ersten Verriegelungsausbildungen des Kupplungsgliedes in Eingriff kommen mit einer der zweiten Verriegelungsausbildungen jedes der gekuppelten Verbinderglieder, um die Verbinderglieder in dem gekuppelten Zustand zu halten.

2. Verbinderglied nach Anspruch 1, wobei die ersten Verriegelungsausbildungen (40) Innenvorsprünge an dem Kupplungsglied sind und wobei die zweiten Verriegelungsausbildungen umfangsmäßige Nutenteile (46, 48) am zweiten Teil des Körpers sind.

3. Verbinderglied nach Anspruch 1, bei dem der erste Teil des Körpers im allgemeinen zylindrisch ist und der zweite Teil des Körpers im ganzen halbzylindrisch ist.

4. Verbinderglied nach Anspruch 3, bei dem der zweite Teil des Körpers einen im wesentlichen planaren Teil (24) aufweist, der einen Teil der Passungsoberfläche bildet und die Längsachse enthält.

5. Verbinderglied nach Anspruch 4, bei dem der planare Teil mit Führungs- und Anordnungsmitteln (32, 34) ausgestattet ist, und zwar 180° dreh-symetrisch um die Querachse.

6. Verbinderglied nach Anspruch 1, wobei das Kupplungsglied in eine Position nach hinten gegenüber dem vorderen Ende des ersten Teils des Körpers gleitbar ist.

7. Verbinderglied nach Anspruch 1, bei dem das Kupplungsglied mindestens in seiner vorderen Position elastisch in die Rückwärtsrichtung vorgespannt ist.

8. Verbinderglied nach Anspruch 1 mit einer Öffnung (60) ausgebildet in dem Kupplungsglied, wobei der Verbinderkörper derart markiert ist, daß dann, wenn das Kupplungsglied vollständig in seine zweite Orientierung verdreht ist, der durch die Öffnung im Verbinderglied sichtbare Teil des Verbindergliedes eine visuelle Anzeige

dafür schafft, daß die Verriegelung vollständig ist.

## Revendications

1. Elément de connecteur hermaphrodite pour fibres optiques ou conducteurs électriques comprenant un corps muni, à son extrémité avant, d'une surface d'accouplement pour accouplement avec un élément de connecteur identique opposé, la surface d'accouplement (24) présentant une symétrie de rotation de 180° par rapport à un axe transverse (36) du corps et un élément de couplage monté autour du corps pour tourner par rapport à un axe longitudinal (18) de l'élément de connecteur orthogonalement audit axe transverse, dans lequel:

deux premières configurations de verrouillage diamétralement opposées (40) sont prévues sur l'élément de couplage (14);

une première partie (26) du corps (12) se termine vers l'arrière de l'axe transverse et une seconde partie (28) du corps s'étend vers l'avant de la première partie, deux secondes configurations de verrouillage (46, 48) espacées longitudinalement étant prévues sur la seconde partie du corps;

l'élément de couplage peut tourner à partir d'une première orientation dans laquelle l'élément de connecteur peut être couplé et découplé d'un élément de connecteur identique opposé vers une seconde orientation dans laquelle les éléments de connecteur sont verrouillés à l'état couplé; et

les configurations de verrouillage (40, 46, 48) ont une forme et une position telles que, par suite d'un accouplement avec un élément de connecteur identique opposé et avec l'élément de couplage dans sa seconde orientation, les deux premières configurations de verrouillage de l'élément de couplage entrent en engagement avec l'une des secondes configurations de verrouillage de chacun des éléments de connecteur couplés pour maintenir les éléments de connecteur dans l'état couplé.

2. Elément de connecteur selon la revendication 1, dans lequel les premières configurations de verrouillage (40) sont des parties en saillie vers l'intérieur sur l'élément de couplage et les secondes configurations de verrouillage sont des parties de rainures périphériques (46, 48) sur la seconde partie du corps.

3. Elément de connecteur selon la revendication 1, dans lequel la première partie du corps est de façon générale cylindrique et la seconde partie du corps est de façon générale semi-cylindrique.

4. Elément de connecteur selon la revendication 3, dans lequel la seconde partie du corps comprend une partie sensiblement plane (24) faisant partie de la surface d'accouplement et contenant l'axe longitudinal.

5. Elément de connecteur selon la revendication 4, dans lequel la partie plane est munie de moyens de guidage et de positionnement (32, 34) symétriques pour une rotation de 180° par rapport à l'axe transverse.

6. Elément de connecteur selon la revendication 1, dans lequel l'élément de couplage peut coulisser vers une position à l'arrière de l'extrémité avant de la première partie du corps.

7. Elément de connecteur selon la revendication 1, dans lequel l'élément de couplage, au moins quand il est dans sa position avant, est sollicité élastiquement vers la direction arrière.

8. Elément de connecteur selon la revendication 1, comprenant une ouverture (60) formée dans l'élément de couplage, et le corps de connecteur étant repéré de sorte que, quand l'élément de couplage est complètement entraîné en rotation selon sa seconde orientation, la partie de l'élément de connecteur visible à travers l'ouverture dans l'élément de couplage assure une indication visuelle du fait que le verrouillage est réalisé.

FIG.1

FIG.7

50 54 52 56 26 30 46 2B 58 44 10

16

64

62

31

38 III

20

32 36 34 24 18

38

22

30 14 12

FIG.2

II 48 20

44 44,46

30

40 40

34

60 60

32

42

22 14

12

II FIG.3

0 114 230

FIG.4

FIG.5

FIG.6